# EUROPÄISCHE PATENTSCHRIFT

(11) **EP 1 459 793 B1**
(45) Veröffentlichungstag und Bekanntmachung des Hinweises auf die Patenterteilung: **27.07.2011**
(21) Anmeldenummer: 04405092.0
(22) Anmeldetag: 18.02.2004
(51) Int. Cl.: B01D 3/00, B01D 53/18

(54) **Feinverteiler für eine Flüssigkeit**
Liquid distributor
Distributeur de liquide

(30) Priorität: 17.03.2003 EP 03405181
(43) Veröffentlichungstag der Anmeldung: 22.09.2004
(73) Patentinhaber: Sulzer Chemtech AG, 8404 Winterthur (CH)
(72) Erfinder: Kehrer, Florian, 8307 Effretikon (CH)
(74) Vertreter: Sulzer Management AG

(56) Entgegenhaltungen:
- EP-A- 1 005 889
- EP-A- 1 153 639
- DE-A- 2 206 230
- US-A- 5 783 119

## Beschreibung

Die Erfindung betrifft einen Feinverteiler für eine Flüssigkeit sowie eine Kolonne mit einem solchen Feinverteiler. Mit dem Feinverteiler lassen sich geringe Mengen an Flüssigkeit gleichmässig auf eine Packung der Kolonne verteilen.

Es ist eine Vielzahl von Flüssigkeitsverteilern bekannt, die eine gleichmässige Berieselung einer Packung mit kleinen Flüssigkeitsmengen ermöglichen. Aus der EP-A- 0 512 277 ist ein solcher Verteiler bekannt, bei dem die Flüssigkeit unten an Verteilrinnen in Töpfe und aus diesen gleichmässig zu fingerartigen Leitelementen weiter geleitet wird. Es wird die Flüssigkeit aus Öffnungen der Töpfe über Drahtstücke den Leitelementen zugeführt und auf diesen zu Abtropfspitzen weitergeleitet. Die Leitelemente sind an jedem Topf radial so gegen aussen gebogen, dass alle Abtropfspitzen des Flüssigkeitsverteilers in einer gleichmässigen Verteilung über der Packung angeordnet sind. Des weiteren ist ein Flüssigkeitsverteiler aus der die Basis des Oberbegriffs von Anspruch 1 bildenden Schrift EP 1 153 639 A1 bekannt, der Leitelemente aufweist, die in einen Verteilbereich übergehen, wobei der Verteilbereich durch zwei in einem Winkel zueinanderstehende Wandstücke ausgebildet ist. Hierdurch wird eine lineare Ausbreitung der Flüssigkeit parallel zur Längserstreckung der vertikalen Kanäle, auch als Kamine bezeichnet, ermöglicht. Im Scheitel des durch die Wandstücke gebildeten Kanals befinden sich schmale Zwischenstege und schlitzförmige Durchtrittsöffnungen, aus denen ein ganz oder weitgehend geschlossener Flüssigkeitsvorhang austritt.

Aufgabe der Erfindung ist es, einen weiteren Feinverteiler für Flüssigkeiten zu schaffen, der unter Verwendung einfacherer Mitteln eine gleichmässige Verteilung kleinster Flüssigkeitsmengen ermöglicht. Diese Aufgabe wird durch den im Anspruch 1 definierten Feinverteiler gelöst.

Verteilstufe zur zugeordneten Verteilrinne sowie durch sie hindurch und bildet unterhalb der Verteilrinne eine Abtropfkante für die zugeleitete Flüssigkeit. Jedes Leitmittel weist zumindest teilweise eine dreidimensionale Strukturierung sowie eine regelmässige Perforierung auf. Jede Verteilrinne ist als Stauraum ausgebildet, in dem eine Verteilung der Flüssigkeit unter Verwendung eines Drosselmittels und aufgrund eines hydrodynamischen Ausgleichs erfolgt.

Die abhängigen Ansprüche 2 bis 8 betreffen vorteilhafte Ausführungsformen des erfindungsgemässen Feinverteilers. Eine Kolonne mit dem erfindungsgemässen Feinverteiler ist Gegenstand der Ansprüche 9 und 10.

Nachfolgend wird die Erfindung anhand der Zeichnungen erläutert. Es zeigen:
- Fig. 1: eine schematisch dargestellte Draufsicht auf einen Flüssigkeitsverteiler, der über einer strukturierten Packung in einer Kolonne angeordnet ist,
- Fig. 2: ein Feinverteiler-Element eines erfindungsgemässen Feinverteilers, der in der Kolonne einsetzbar ist,
- Fig. 3: einen Querschnitt durch eine zweite Ausführungsform des erfindungsgemässen Feinverteiler-Elements und
- Fig. 4, 5: zwei weitere Ausführungsformen des erfindungsgemässen Flüssigkeitsverteilers.

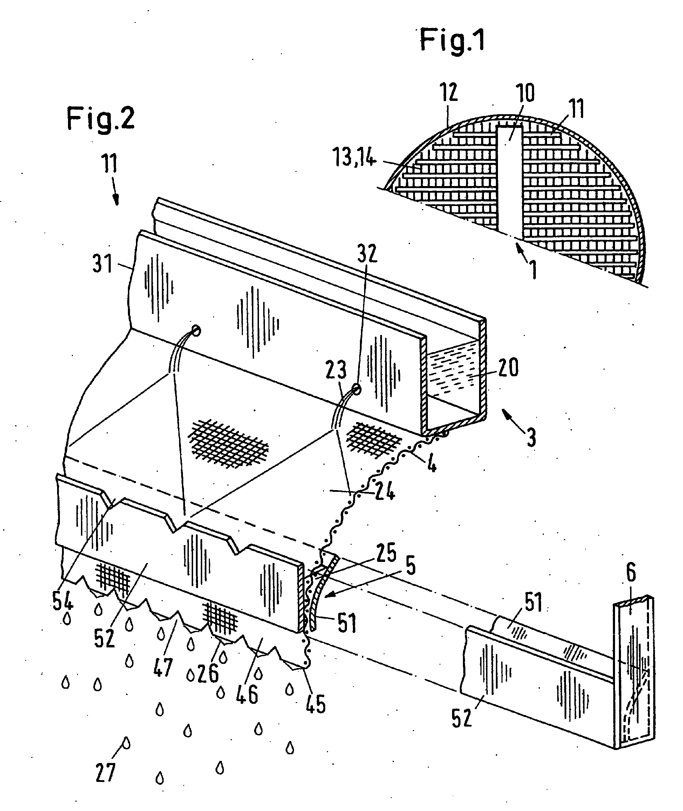

In Fig. 1 ist - schematisch dargestellt - ein teilweise gezeigter Querschnitt durch eine Kolonne 12 und ein Flüssigkeitsverteiler 1 in Draufsicht zu sehen. Dieser Flüssigkeitsverteiler 1 ist ein Feinverteiler, mit dem eine Feinverteilung einer Flüssigkeit durchführbar ist. Der Feinverteiler 1 ist über einer strukturierten Packung 13 angeordnet, deren Struktur durch vertikale Lagen 14 gebildet ist. Er umfasst eine Vielzahl von Feinverteiler-Elementen 11, die unter einem Hauptkanal 10 angeordnet und quer (senkrecht oder unter einem Winkel ungleich 90°) zu den Lagen 14 ausgerichtet sind. Oben angeordnete Teile der Feinverteiler-Elemente 11 bilden eine primäre Verteilstufe, unten angeordnete Teile eine sekundäre Verteilstufe.

Details zum Feinverteiler-Element 11 sind in Fig. 2 dargestellt. Das Feinverteiler-Elemente 11 umfasst einen Kanal 3, der Teil der primären Verteilstufe ist. Der Kanal 3 weist in einer vertikalen Wand 31, die auch geneigt sein könnte, Austrittsöffnungen 32 auf. Die Wandstärke der Wand 31 ist typischerweise kleiner als der Durchmesser der kleinsten Austrittsöffnung 32. Es wird eine Flüssigkeit 20 verteilt. Oberhalb einer tief angeordneten Austrittsöffnung 32 kann eine zusätzliche Austrittsöffnung (nicht dargestellt) oder auch mehrere Öffnungen vorgesehen sein. Statt eines gegen oben offenen Kanals lässt sich auch ein Rohr verwenden, in dem seitliche Austrittsöffnungen auf dem Niveau einer Rohrachse oder in der Nähe dieses Niveaus angeordnet sind.

Auf einem tiefer liegenden Niveau unter dem Kanal 3 ist eine Verteilrinne 5 angeordnet, die Teil der sekundären Verteilstufe ist. Sie ist dem Kanal 3 zugeordnet und zumindest angenähert parallel zu diesem ausgerichtet. Ein flächenartiges Leitmittel 4 zum Leiten von Flüssigkeit 20, die in Form von Strahlen 23 aus dem Kanal 3 austritt, erstreckt sich vom Kanal 3 zu der zugeordneten Verteilrinne 5 und durch diese hindurch zu einer Abtropfkante 45. Das Leitmittel 4 weist eine dreidimensionale Strukturierung sowie eine regelmässige Perforierung auf: Es besteht beispielsweise aus einem Metallgewebe oder einem feinmaschigen Streckgitter, auf dem die auftreffenden Flüssigkeitsstrahlen 23 durch eine transversale Ausbreitung 24 vorverteilt wird.

Die Verteilrinne 5 umfasst zwei Blechflanken 51, 52, die einen nach unten sich verjüngenden, in einen Spalt übergehenden Bereich bilden. Das flächenartige und strukturierte Leitmittel 4 steht im Spalt entlang der ganzen Verteilrinne 5 mit den inneren Oberflächen der beiden Blechflanken 51, 52 in gleichmässigem Kontakt und wirkt so als ein Drosselmittel 25, das auf die Strömung der abfliessenden Flüssigkeit 20 einen Widerstand ausübt. Blechstreifen 6 an den zwei Enden der Verteilrinne 5, von denen nur einer dargestellt ist, hindern die Flüssigkeit 20 an einem seitlichen Austreten. Mit den beiden Blechstreifen 6 kann die Verteilrinne 5 am Kanal 3 befestigt werden. Das Leitmittel 4 hat - anders als dargestellt - eine Breite, die bis zu den beiden Blechstreifen 6 reicht. Auf diese Weise ist die Verteilrinne 5 als ein Stauraum ausgebildet, in dem eine weitere Verteilung der Flüssigkeit durch einen hydrodynamischen Ausgleich erfolgen kann.

Die Abtropfkante 45 wird mit Vorteil in schmale Segmente 46 unterteilt, die durch zwickelförmige Ausschnitte 47 von einander getrennt sind. Bei einer idealen Ausführung des Feinverteiler-Elements 11 mit einer horizontalen Ausrichtung sammelt sich an den unteren Kanten aller Segmente 46 Flüssigkeit 26 an, die sich in Form von Tropfen 27 entlang der gesamten Abtropfkante 45 von dieser löst. Es können auch kerbartige Ausnehmungen 54 an der oberen Kante der Blechflanke 52 vorgesehen werden. Staut sich in der Verteilrinne 5 zu viel Flüssigkeit an, so wirken solche Ausnehmungen als Überlaufstellen, durch die eine weitgehend gleichmässige Verteilung der überschüssigen Flüssigkeit ermöglicht wird.

Die Wirkung des dem hydrodynamischen Ausgleich dienenden Drosselmittels 25 hängt von der Viskosität der Flüssigkeit 20 und der Strukturierung des Leitmittels 4 ab. Die Strukturierung des Leitmittels 4 wird der Viskosität der zu verteilenden Flüssigkeit entsprechend ausgebildet. Für die Verteilung einer Flüssigkeit 20 mit niederer Viskosität weist das Leitmittel 4 mit Vorteil eine einheitliche und feine Strukturierung auf. Für die Verteilung einer viskosen Flüssigkeit 20, die eine hohe Viskosität hat, kann eine grobe Strukturierung, beispielsweise eine Rillierung, einer feinen Strukturierung überlagert werden. Durch die grobe Strukturierung ergeben sich relativ breite Lücken zwischen dem Leitmittel 4 und den Blechflanken 51 sowie 52. Die viskose Flüssigkeit 20 fliesst hauptsächlich durch diese Lücken ab.

Das Leitmittel 4 ist vorzugsweise ein Metallgewebe, insbesondere ein sogenanntes "Fünfschaft-Gewebe" oder auch ein einfaches Quadratmaschengewebe. Das Fünfschaft-Gewebe ist ein fünfbindiges Atlasgewebe, das zwei stark unterschiedlich strukturierte Oberflächen hat. Die eine Oberfläche eignet sich besonders gut für die Ausbildung eines Rieselfilms. Daher wird das Fünfschaft-Gewebe bevorzugt zur Herstellung von strukturierten Packungen verwendet. Auch für die Verwendung im erfindungsgemässen Feinverteilers 1 ist dieses Gewebe vorteilhaft.

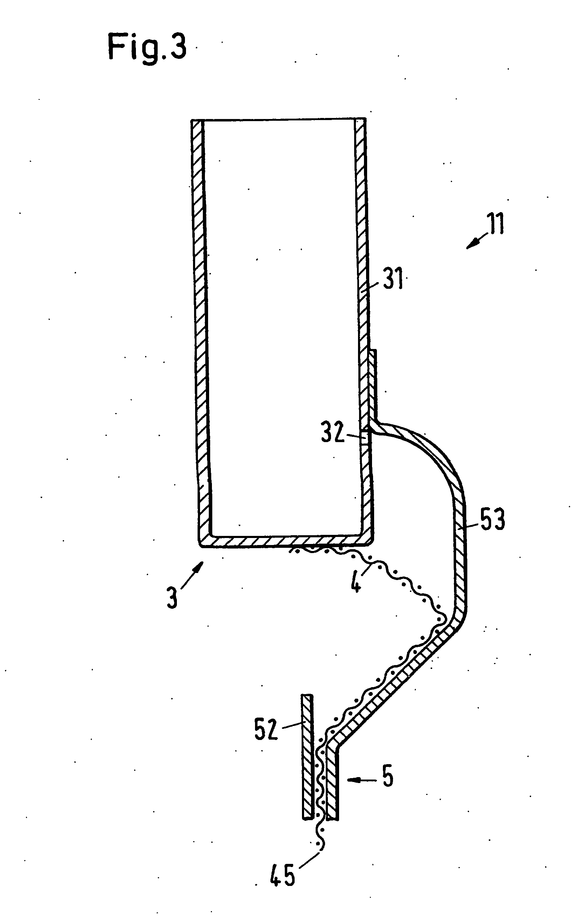

Fig. 3 zeigt einen Querschnitt durch eine zweite Ausführungsform des erfindungsgemässen Feinverteiler-Elements 11. Hier tritt ein zweites flächenartiges Leitmittel 53 auf, das den Kanal 3 mit der Verteilrinne 5 verbindet. Auch dieses zweite Leitmittel 53 hat die Funktion, die zu verteilende Flüssigkeit 20, die aus Öffnungen 32 als nicht dargestellte Strahlen austritt, nach unten zum ersten Leitmittel 4 zu lenken. Dieses erste Leitmittel 4 schirmt den freien Raum zwischen dem Kanal 3 und dem zweiten Leitmittel 53 gegen unten ab. Weiter unten leitet es gemeinsam mit dem Leitmittel 53 die Flüssigkeit in die Verteilrinne 5, die weitgehend gleich wie in Fig. 2 gezeigt ausgebildet ist.

Das zweite Leitmittel 53 ist ein geformtes Blech, das eine mechanisch stabile Verbindung zwischen dem Kanal 3 und der Verteilrinne 5 herstellt. Es bildet insbesondere die eine Flanke der Verteilrinne 5. Die zweite Flanke 52 kann durch Punktschweissung mit dem ersten Leitmittel 4 und dem zweiten Leitmittel 53 verbunden werden. Durch die Dicke des ersten Leitmittels 4 ergibt sich die Breite des Spalts der Verteilrinne 5.

Der Maximalabstand zwischen benachbarten Austrittsöffnungen 32 des gleichen Kanals beträgt 1 m, vorzugsweise nicht mehr als 50 cm. Die Durchmesser der Austrittsöffnung 32 sind so gross gewählt, dass pro Stunde zwischen 1 und 30 Liter der zu verteilenden Flüssigkeit 20 durch jede Austrittsöffnung 32 abgebbar ist.

Die Packung 13 weist vertikale Lagen 14 auf und die Verteilrinnen 5 des Verteilers 1 sind quer (senkrecht oder unter einem Winkel ungleich 90°) zu diesen Lagen 14 angeordnet. Die Lagen 14 sind beispielsweise aus Folien hergestellt, die jeweils eine dreidimensionale Strukturierung sowie eine regelmässige Perforierung aufweisen. Das erste Leitmittel 4 des Feinverteilers 1 ist mit Vorteil auch aus dieser Folie oder einer ähnlichen hergestellt.

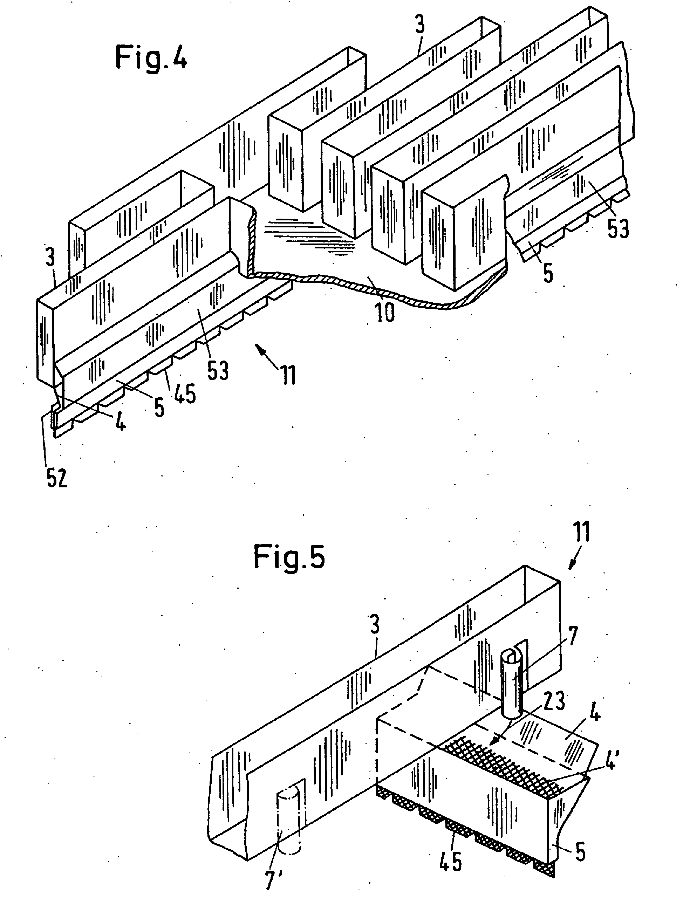

Bei einer Ausführungsform, die in Fig. 4 dargestellt ist, umfasst der Flüssigkeitsverteiler 1 einen Hauptkanal 10 und Nebenkanäle 3 (primäre Verteilstufe), die auf demselben Niveau angeordnet sind. Die Feinverteiler-Elemente 11 sind im wesentlichen gleich wie jene der Fig. 3 ausgebildet. Mit der Verteilrinne 5 wird vorteilhafterweise die Zone unterhalb des Hauptkanals 10 überbrückt.

Bei der Ausführungsform der Fig. 5 wird die Flüssigkeit 23 innerhalb eines rohrartigen Leitorgans 7 aus dem Nebenkanal 3 der sekundären Verteilstufe des Feinverteiler-Elements 11 zugeführt. Hier ist die Verteilrinne 5 der sekundären Verteilstufe quer zum Nebenkanal 3 orientiert. Das Leitorgan 7 lenkt - wie in einer Veröffentlichung, der EP-A- 1 153 640, beschrieben - die Flüssigkeit 23 auf einer schraubenförmigen Bahn auf das Leitmittel 4. Dieses weist in einem unteren Bereich 4' eine dreidimensionale Strukturierung sowie regelmässige Perforierung auf. Der untere Bereich 4' kann aus einem metallischen Gewebe bestehen, das auf einer glatten Blechfolie aufliegt. Die Flüssigkeit 23 fliesst zuerst auf der Blechfolie in Richtung Falllinie und wird anschliessend durch das Gewebe und die Verteilrinne 5 transversal, d. h. quer zur Falllinie verteilt. Es ist jeweils nur ein Leitorgan 7 einer Verteilrinne 5 zugeordnet. Ein zweites Leitorgan 7' des dargestellten Nebenkanals 3 ist strichpunktiert angedeutet. Auch diesem Leitorgan 7' ist eine Verteilrinne 5 zugeordnet (nicht dargestellt). Mit dem Feinverteiler-Element 11 wird der aus der EP-A- 1 153 640 bekannte Flüssigkeitsverteiler zu einem Feinverteiler weiterentwickelt. Dank den Feinverteiler-Elementen 11 kann zwischen benachbarten Nebenkanälen 3 ein grösserer Abstand als beim bekannten Verteiler gewählt werden. Die Verteilrinne 5 hat mit Vorteil eine Länge von 40 bis 60 cm.

## Patentansprüche

1. Feinverteiler (1) für eine Flüssigkeit (20),
mit einer primären Verteilstufe, die eine Mehrzahl von Austrittsöffnungen (32) aufweist,
mit einer sekundären Verteilstufe, die unterhalb der primären Verteilstufe angeordnet ist und Verteilrinnen (5) umfasst,
mit flächenartigen Leitmitteln (4), die von der primären zur sekundären Verteilstufe führen, wobei
jedem flächenartigen Leitmittel (4) eine Austrittsöffnung (32) oder eine Gruppe von Austrittsöffnungen (32) sowie eine Verteilrinne (5) zugeordnet sind und
jedes flächenartige Leitmittel (4), mit welchem Flüssigkeit (23) aus der mindestens einen zugeordneten Austrittsöffnung (32) zur sekundären Verteilstufe zuleitbar ist, sich von der primären Verteilstufe zur zugeordneten Verteilrinne erstreckt, wobei die Verteilrinne (5) durch zwei Blechflanken (51, 52) gebildet ist und
jede Verteilrinne (5) als Stauraum ausgebildet ist, in dem eine Verteilung der Flüssigkeit unter Verwendung eines Drosselmittels (25) und aufgrund eines hydrodynamischen Ausgleichs erfolgt, wobei zwischen den Blechflanken (51, 52) ein sich nach unten verjüngender Bereich in einen Spalt übergeht,
**dadurch gekennzeichnet, dass** jedes flächenartige Leitmittel (4) sich durch die Verteilrinne hindurch erstreckt und unterhalb der Verteilrinne (5) eine Abtropfkante (45) für die zugeleitete Flüssigkeit bildet,
wobei jedes flächenartige Leitmittel (4) zumindest teilweise eine dreidimensionale Strukturierung sowie eine regelmässige Perforierung aufweist und der
Spalt zusammen mit dem Leitmittel (4) das Drosselmittel (25) bildet, wobei die Abtropfkante (45) zwickelförmige Ausschnitte (47) oder kerbartige Ausnehmungen in regelmässigen Abständen aufweist.

2. Feinverteiler nach Anspruch 1, wobei auch die obere Kante der einen Blechflanke (52) zwickelförmige Ausschnitte (47) oder kerbartige Ausnehmungen in regelmässigen Abständen aufweist.

3. Feinverteiler nach Anspruch 2, wobei die Strukturierung des flächenartigen Leitmittels (4) der Viskosität der zu verteilenden Flüssigkeit (20) entsprechend ausgebildet ist, dass für die Verteilung einer Flüssigkeit mit niederer Viskosität das flächenartige Leitmittel (4) mit einer feinen Strukturierung einheitlich strukturiert ist und für die Verteilung einer Flüssigkeit mit hoher Viskosität eine grobe Strukturierung, beispielsweise eine Rillierung, einer feinen Strukturierung überlagert ist.

4. Feinverteiler nach einem der Ansprüche 1 bis 3, wobei das flächenartige Leitmittel (4) ein Metallgewebe ist, insbesondere ein sogenanntes "Fünfschaft-Gewebe" oder ein einfaches Quadratmaschengewebe.

5. Feinverteiler nach einem der Ansprüche 1 bis 4, wobei die primäre Verteilstufe eine Mehrzahl von Kanälen (3) umfasst und die Austrittsöffnungen (32) in seitlichen Wänden (31) der Kanäle angeordnet sind, wobei die Verteilrinnen (5) der sekundären Verteilstufe jeweils einem der Kanäle zugeordnet und zumindest angenähert parallel zum entsprechenden Kanal ausgerichtet sind und wobei die flächenartigen Leitmittel (4) sich jeweils von einem der Kanäle zu der zugeordneten Verteilrinne und durch sie hindurch erstrecken, wobei die Kanäle gegen oben offen oder als Rohre ausgebildet sein können.

6. Feinverteiler nach Anspruch 5, wobei das flächenartige Leitmittel (4) ein erstes flächenartiges Leitmittel ist, wobei ein zweites flächenartiges Leitmittel (53) vorgesehen ist, wobei das zweite flächenartige Leitmittel (53) den Kanal mit der Verteilrinne (5) verbindet und das zweite flächenartige Leitmittel (53) die Funktion hat, die zu verteilende Flüssigkeit (20) nach unten zum ersten flächenartigen Leitmittel (4) zu lenken.

7. Feinverteiler nach Anspruch 6, wobei das zweite flächenartige Leitmittel (53) ein geformtes Blech ist, das eine mechanisch stabile Verbindung zwischen dem Kanal (3) und der Verteilrinne (5) herstellt und dabei die eine Flanke der Verteilrinne ausgebildet ist.

8. Feinverteiler nach einem der Ansprüche 5 bis 7, wobei für jeden Kanal (3) der Maximalabstand zwischen benachbarten Austrittsöffnungen (32) ein Meter, vorzugsweise nicht mehr als 50 cm, beträgt und dass durch jede Austrittsöffnung pro Stunde eine Menge an zu verteilender Flüssigkeit (20) abgebbar ist, deren Wert zwischen einem und dreissig Liter liegt.

9. Feinverteiler nach einem der Ansprüche 1 bis 4, wobei die primäre Verteilstufe eine Mehrzahl von Kanälen (3) umfasst, wobei rohrartige Leitorgane, die seitlich an den Kanälen angeordnet sind, die Flüssigkeit vertikal nach unten zu den Austrittsöffnungen (32) leiten.

10. Feinverteiler nach Anspruch 9, wobei und wobei die Verteilrinne (5) der sekundären Verteilstufe quer zu den Kanälen der primären Verteilstufe ausgerichtet ist.

11. Kolonne mit einer geordneten Packung (13) und mit einem Feinverteiler (1) für Flüssigkeiten (20) gemäss einem der Ansprüche 1 bis 10, wobei die Packung (13) vertikale Lagen (14) aufweist und die Verteilrinnen (5) des Feinverteilers (1) quer - d.h. senkrecht oder unter einem Winkel ungleich 90° - zu diesen Lagen angeordnet sind.

12. Kolonne nach Anspruch 11, wobei die Lagen (14) der Packung (13) aus Folien hergestellt sind, die jeweils eine dreidimensionale Strukturierung sowie eine regelmässige Perforierung aufweisen, und wobei das erste Leitmittel (4) des Feinverteilers (1) aus der gleichen Folie oder einer ähnlichen hergestellt ist.

## Claims

1. A fine distributor (1) for a liquid (20), with a primary distribution stage, which has a plurality of outlet openings, with a secondary distribution stage, which is arranged below the primary distribution stage and includes distribution gutters (5), with areal guide means (4) which lead from the primary distribution stage to the secondary distribution stage, wherein an outlet opening (32) or a group of outlet openings (32) and also a distribution gutter (5) is associated with each areal guide means (4) by means of which liquid (23) can be directed out of the at least one associated outlet opening (32) to the secondary distribution stage, the areal guide means (4) extending from the primary distribution stage to the associated distribution gutter whereby the distribution gutter (5) is formed by two sheet metal flanks (51, 52) and wherein each distribution gutter (5) is designed as a stagnation space in which a distribution of the liquid occurs with the use of a throttle means (25) and on the basis of a hydrodynamic balance whereby between the sheet metal flanks (51, 52) a region tapers downwardly to a gap, **characterised in that** each areal guide means (4) extends through the corresponding distribution gutter and forms a drip edge (45) below the distribution gutter for the liquid supplied, wherein each areal guide means (4) has at least partially a three-dimensional structuring and also a regular perforation and the gap together with the guide means (4) forms the throttle means (25), whereby the drip edge (45) has gusset-shaped cut-outs (47) or notch-like recesses at regular intervals.

2. A fine distributor in accordance with claim 1, wherein also the upper edge of the one sheet metal flank (52) has gusset-shaped cut-outs (47) or notch-like recesses at regular intervals.

3. A fine distributor in accordance with claim 2, whereby the structuring of the areal guide means (4) is designed corresponding to the viscosity of the liquid (20) to be distributed, in that the areal guide means (4) is uniformly structured with a fine structure for the distribution of a liquid of low viscosity and for the distribution of a liquid of high viscosity a coarse structuring, for example grooving, is superimposed on a fine structuring.

4. A fine distributor in accordance with one of the claims 1 to 3, whereby the areal guide means (4) is a metal fabric, in particular a so-called "five shaft fabric" or a simple square mesh fabric.

5. A fine distributor in accordance with one of the claims 1 to 4, wherein the primary distribution stage includes a plurality of channels (3) and the outlet openings (32) are arranged in side walls (31) of the channels, and whereby the distribution gutters (5) of the secondary distribution stage are respectively associated with one of the channels and aligned at least approximately parallel to the corresponding channel and whereby the areal guide means (4) extend respectively from one of the channels to the associated distribution gutter and through it, wherein the channels can be designed open to the top or as tubes.

6. A fine distributor in accordance with claim 5, whereby the areal guide means (4) is a first areal guide means, in that a second areal guide means (53) is foreseen, said second areal guide means (53) connects the channel with the distribution gutter (5) and the second areal guide means has the function of directing the liquid (20) to be distributed downwardly to the first areal guide means (4).

7. A fine distributor in accordance with claim 6, wherein the second areal guide means (53) is a formed metal sheet, which produces a mechanically stable connection between the channel (3) and the distribution gutter (5) and in this way forms the one flank of the distribution gutter.

8. A fine distributor in accordance with one of claims 5 to 7, wherein for each channel (3) the maximum distance between neighbouring outlet openings (32) amounts to one metre, preferably not more than 50 cm and that an amount of liquid (20) to be distributed can be given off per hour through each outlet aperture in an amount between one and thirty litres.

9. A fine distributor in accordance with one of the claims 1 to 4, wherein the primary distribution stage includes a plurality of channels (3), wherein tubular guide organs, which are arranged sideways at the channels, direct the liquid vertically downwards to the outlet openings (32)

10. A fine distributor in accordance with claim 9, wherein the distribution gutter (5) of the secondary distribution stage is aligned transversely to the channels of the primary distribution stage.

11. A column with an ordered packing (13) and with a fine distributor (1) for liquids (20) in accordance with one of the claims 1 to 10, wherein the packing (13) has vertical layers (14) and the distribution gutters (5) of the fine distributor are arranged transversely i.e. perpendicular to these layers or at an angle different from 90°.

12. A column in accordance with claim 11, wherein the layers (14) of the packing (13) are manufactured from foils which respectively have a three-dimensional structuring and a regular perforation and wherein the first guide means (4) of the fine distributor (1) is manufactured from the same foil or from a similar one.

## Revendications

1. Distributeur fin (1) pour un liquide (20), avec un étage de distribution primaire, qui présente une pluralité d'ouvertures de sortie (32),
avec un étage de distribution secondaire, qui est disposé en dessous de l'état de distribution primaire et comprend des rainures de distribution (5), avec des moyens de guidage plans (4) qui mènent de l'étage de distribution primaire à l'étage de distribution secondaire, où
sont associés à chaque moyen de guidage plan (4) une ouverture de sortie (32) ou un groupe d'ouvertures de sortie (32) ainsi qu'une rainure de distribution (5), et chaque moyen de guidage plan (4), au moyen duquel le liquide (23) peut être amené depuis au moins une ouverture de sortie associée précitée (32) à l'étage de distribution secondaire, s'étend de l'étage de distribution primaire à la rainure de distribution associée, où la rainure de distribution (5) est formée par deux flancs de tôle (51, 52), et chaque rainure de distribution (5) est réalisée comme espace de refoulement dans lequel une distribution du liquide a lieu en utilisant un moyen d'étranglement (25) et en raison d'une égalisation hydrodynamique, où entre les flancs de tôle (51, 52), une zone rétrécissant vers le bas devient une fente, **caractérisé en ce que** chaque moyen de guidage plan (4) s'étend à travers la rainure de distribution associée et forme en dessous de la rainure de distribution (5) une arête d'égouttement (45) pour le liquide amené, où chaque moyen de guidage plan (4) présente au moins partiellement une structuration tridimensionnelle ainsi qu'une perforation régulière, et la fente forme conjointement avec le moyen de guidage (4) le moyen d'étranglement (25), où l'arête d'égouttement (45) présente des découpures en forme de coin (47) ou des évidements en forme d'encoche à des intervalles réguliers.

2. Distributeur fin selon la revendication 1, où également l'arête supérieure d'un flanc de tôle (52) présente des découpures en forme de coin (47) ou des évidements en forme d'encoche à des intervalles réguliers.

3. Distributeur fin selon la revendication 2, où la structuration du moyen de guidage plan (4) est réalisée en fonction de la viscosité du liquide (20) à distribuer, que pour la distribution d'un liquide d'une viscosité plus basse, le moyen de guidage plan (4) est structuré unitairement avec une structuration fine, et pour la distribution d'un liquide d'une viscosité élevée, une structuration grossière, par exemple un rainurage, est superposée à une structuration fine.

4. Distributeur fin selon l'une des revendications 1 à 3, où le moyen de guidage plan (4) est un tissu métallique, en particulier un soi-disant "tissu à cinq lames" ou un tissu à maille carrée simple.

5. Distributeur fin selon l'une des revendications 1 à 4, où l'étage de distribution primaire comprend une pluralité de canaux (3), et les ouvertures de sortie (32) sont disposées dans des parois latérales (31) des canaux, où les rainures de distribution (5) de l'étage de distribution secondaire sont associées à chaque fois à un des canaux et sont orientées au moins approximativement parallèlement au canal correspondant, et où les moyens de guidage plan (4) s'étendent depuis respectivement un des canaux à la rainure de distribution associée et à travers celle-ci, où les canaux peuvent être réalisés en étant ouverts vers le haut ou peuvent être réalisés comme tubes.

6. Distributeur fin selon la revendication 5, où le moyen de guidage plan (4) est un premier moyen de guidage plan, où un deuxième moyen de guidage plan (53) est prévu, où le deuxième moyen de guidage plan (53) relie le canal à la rainure de distribution (5), et le deuxième moyen de guidage plan (53) a pour fonction de guider le liquide à distribuer (20) vers le bas vers le premier moyen de guidage plan (4).

7. Distributeur fin selon la revendication 6, où le deuxième moyen de guidage plan (53) est une tôle formée qui établit une liaison mécaniquement stable entre le canal (3) et la rainure de distribution (5) et, ce faisant, un flanc précité de la rainure de distribution est réalisé.

8. Distributeur fin selon l'une des revendications 5 à 7, où pour chaque canal (3), l'écart maximal entre des ouvertures de sortie avoisinantes (32) est d'un mètre, et est de préférence non supérieur à 50 cm, et en ce qu'à travers chaque ouverture de sortie, par heure, une quantité de liquide à distribuer (20) peut être émise dont la valeur se situe entre un et trente litres.

9. Distributeur fin selon l'une des revendications 1 à 4, où l'étage de distribution primaire comprend une pluralité de canaux (3), où des organes de guidage tubulaires, qui sont disposés latéralement aux canaux, guident le liquide verticalement vers le bas vers les ouvertures de sortie (32).

10. Distributeur fin selon la revendication 9, où la rainure de distribution (5) de l'étage de distribution secondaire est orientée transversalement aux canaux de l'étage de distribution primaire.

11. Colonne avec une garniture ordonnée (13) et avec un distributeur fin (1) pour des liquides (20) selon l'une des revendications 1 à 10, où la garniture (13) présente des couches verticales (14), et les rainures de distribution (5) du distributeur fin (1) sont disposées transversalement - c'est-à-dire perpendiculairement ou selon un angle non égal à 90° - à ces couches.

12. Colonne selon la revendication 11, où les couches (14) de la garniture (13) sont réalisées en des feuilles qui présentent chacune une structuration tridimensionnelle ainsi qu'une perforation régulière, et où le premier moyen de guidage (4) du distributeur fin (1) est réalisé dans la même feuille ou dans une feuille similaire.
